(19) Europäisches Patentamt
European Patent Office
Office européen des brevets

(11) EP 4 317 841 A1

(12) EUROPÄISCHE PATENTANMELDUNG

(43) Veröffentlichungstag:
07.02.2024 Patentblatt 2024/06

(21) Anmeldenummer: 22188925.6

(22) Anmeldetag: 05.08.2022

(51) Internationale Patentklassifikation (IPC):
F25B 1/10 (2006.01)  F25B 9/00 (2006.01)
F25B 40/00 (2006.01)  F25B 41/42 (2021.01)

(52) Gemeinsame Patentklassifikation (CPC):
F25B 1/10; F25B 9/008; F25B 40/00; F25B 41/42;
F25B 2309/061; F25B 2400/0409; F25B 2400/13;
F25B 2600/0261; F25B 2600/2501;
F25B 2600/2509; F25B 2600/2513

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
KH MA MD TN

(71) Anmelder: Weiss Technik GmbH
35447 Reiskirchen (DE)

(72) Erfinder:
• Zahrt, Yannik
35466 Rabenau (DE)
• Reuschel, Dennis
35396 Gießen (DE)
• Haack, Christian
35037 Marburg (DE)

(74) Vertreter: advotec.
Patent- und Rechtsanwaltspartnerschaft
Tappe mbB
Georg-Schlosser-Straße 6
35390 Gießen (DE)

(54) PRÜFKAMMER UND VERFAHREN ZUR STEUERUNG

(57) Die Erfindung betrifft ein Verfahren zur Konditionierung von Luft in einem gegenüber einer Umgebung verschließbaren und temperaturisolierten Prüfraum einer Prüfkammer, sowie eine Prüfkammer, insbesondere Klimakammer, zur Aufnahme von Prüfgut, wobei mittels einer Kühleinrichtung (10) einer Temperiervorrichtung der Prüfkammer, mit einem Kühlkreislauf (11) mit Kohlenstoffdioxid ($CO_2$) als einem Kältemittel, einem Wärmeübertrager (12) im Prüfraum, einem Niederdruckverdichter (13) und einem in einer Strömungsrichtung des Kältemittels dem Niederdruckverdichter nachfolgenden Hochdruckverdichter (14), einem Gaskühler (15) und einem Expansionsventil (17) eine Temperatur in einem Temperaturbereich von -20 °C bis +180 °C innerhalb des Prüfraums ausgebildet wird, wobei die Temperatur in dem Prüfraum mittels einer Steuervorrichtung der Prüfkammer gesteuert und/oder geregelt wird, wobei der Kühlkreislauf einen internen Wärmeübertrager (16) aufweist, der an einer Hochdruckseite (21) des Kühlkreislaufs in der Strömungsrichtung nachfolgend dem Gaskühler und vor dem Expansionsventil angeschlossen ist, wobei der interne Wärmeübertrager mit einem Mitteldruckbypass (22) des Kühlkreislaufs gekoppelt ist, wobei der Mitteldruckbypass in der Strömungsrichtung nachfolgend dem internen Wärmeübertrager oder dem Gaskühler und vor dem Expansionsventil an der Hochdruckseite sowie vor dem Hochdruckverdichter und nachfolgend dem Niederdruckverdichter an eine Mitteldruckseite (20) des Kühlkreislaufs angeschlossen ist, wobei mittels eines zweiten Expansionsventils (23) Kältemittel von der Hochdruckseite über den internen Wärmeübertrager in die Mitteldruckseite dosiert wird.

Fig. 1

**Beschreibung**

Die Erfindung betrifft eine Prüfkammer, insbesondere Klimakammer zur Konditionierung von Luft, sowie ein Verfahren zur Konditionierung von Luft in einem gegenüber einer Umgebung verschließbaren und temperaturgedämmten Prüfraum einer Prüfkammer zur Aufnahme von Prüfgut, wobei mittels einer Kühleinrichtung einer Temperiervorrichtung der Prüfkammer, mit einem Kühlkreislauf mit Kohlenstoffdioxid als einem Kältemittel, einem Wärmeübertrager im Prüfraum, einem Niederdruckverdichter und einem in einer Strömungsrichtung des Kältemittels dem Niederdruckverdichter nachfolgenden Hochdruckverdichter, einem Gaskühler und einem Expansionsventil eine Temperatur in einem Temperaturbereich von -20°C bis + 180°C innerhalb des Prüfraums ausgebildet wird, wobei die Temperatur in den Prüfraum mittels einer Steuervorrichtung der Prüfkammer gesteuert und/oder geregelt wird.

Derartige Prüfkammern werden regelmäßig zur Überprüfung von physikalischen und/oder chemischen Eigenschaften von Gegenständen, insbesondere Vorrichtungen eingesetzt. So sind Temperaturprüfschränke oder Klimaprüfschränke bekannt, innerhalb derer Temperaturen in einem Bereich von -70°C bis +180°C eingestellt werden können. Bei Klimaprüfschränken können ergänzend gewünschte Klimabedingungen eingestellt werden, denen dann die Vorrichtung bzw. das Prüfgut über einen definierten Zeitraum ausgesetzt wird. Eine Temperierung eines das zu prüfende Prüfgut aufnehmendem Prüfraums erfolgt regelmäßig in einem Umluftkanal innerhalb des Prüfraums. Der Umluftkanal bildet einen Luftbehandlungsraum im Prüfraum aus, in dem Wärmetauscher zur Erwärmung oder Kühlung der den Umluftkanal bzw. den Prüfraum durchströmenden Luft angeordnet sind. Dabei saugt ein Lüfter bzw. ein Ventilator die im Prüfraum befindliche Luft an und leitet sie im Umluftkanal zu den jeweiligen Wärmetauschern. Das Prüfgut kann so temperiert oder auch einem definierten Temperaturwechsel ausgesetzt werden. Während eines Prüfinterwalls kann dann beispielsweise eine Temperatur zwischen einem Temperaturmaximum und einem Temperaturminimum der Prüfkammer wechseln. Eine derartige Prüfkammer ist beispielweise aus der EP 0 344 397 A2 bekannt.

Das in einem Kühlkreislauf eingesetzte Kältemittel sollte ein relativ geringes $CO_2$-Äquivalent aufweisen, das heißt ein relatives Treibhauspotenzial oder auch Global Warming Potential (GWP) sollte möglichst gering sein, um eine indirekte Schädigung der Umwelt durch das Kältemittel bei Freisetzung zu vermeiden. Es ist daher auch bekannt Kohlenstoffdioxid ($CO_2$) bzw. Kohlendioxid als Reinstoffkältemittel zu verwenden. Kohlenstoffdioxid ist kostengünstig erhältlich, nicht brennbar und durch einen GWP von 1 im Wesentlichen umweltneutral. Kohlenstoffdioxid weist eine Gefriertemperatur bzw. einen Tripelpunkt von -56,6°C auf, was eine Erzielung von niedrigeren Temperaturen mit Kohlenstoffdioxid alleine nicht ermöglicht.

Weiter sind Kühleinrichtungen bekannt, die als sogenannte Boosteranlage ausgeführt sind. In einem Kühlkreislauf der Kühleinrichtungen ist stets ein Hochdruckverdichter einem Niederdruckverdichter in Reihe nachgeschaltet, so dass eine stufenweise Verdichtung des Kältemittels mit dem Niederdruckverdichter und nachfolgend mit dem Hochdruckverdichter erfolgt. Aufgrund der hohen Anforderungen an eine Temperaturregelung innerhalb des Temperaturbereichs des Prüfraums kommt es während eines Betriebs der Prüfkammer regelmäßig zu Schwankungen in einer Lastanforderung. Eine von den Verdichtern und dem Expansionsventil erzeugte Kälteleistung muss daher stufenlos regelbar sein. Gleichwohl ist es wünschenswert, dass die Verdichter, wenn es sich beispielsweise um Kompressoren handelt, nicht häufig eingeschaltet und ausgeschaltet werden, um eine Lebensdauer der Verdichter zu verlängern.

Da Kohlenstoffdioxid als Kältemittel eine sehr hohe volumetrische Kälteleistung aufweist, wird selbst bei einem Einsatz von Verdichtern mit sehr wenig Hubvolumenstrom eine sehr große Kälteleistung durch den Kühlkreislauf bereitgestellt. Darüber hinaus ist ein Druckbereich von Kühlkreisläufen mit Kohlenstoffdioxid als Kältemittel bei einem transkritischen Betrieb sehr hoch (bis 120 bar), weshalb die zur Ausbildung des Kühlkreislaufs erforderlichen Komponenten vergleichsweise teuer sind. Hinzu kommt, dass derartige Kühlkreisläufe einen komplexen Aufbau aufweisen, was einen großen Bauraum erfordert. Bisher sind derartige Kühlkreisläufe mit Kohlenstoffdioxid als Kältemittel daher nur für Anlagen bzw. Prüfkammern mit entsprechend hoher Kälteleitung und damit einem vergleichsweise großen Prüfraum bzw. großen Geräteabmessungen sinnvoll nutzbar. Eine wirtschaftliche Nutzung in vergleichsweise kleinen Anlagen bzw. Prüfkammern mit einem kleinen Volumen eines Prüfraums, beispielsweise mit 25 Litern, ist bisher nicht möglich.

Der vorliegenden Erfindung liegt daher die Aufgabe zugrunde, ein Verfahren zur Konditionierung von Luft in einem Prüfraum einer Prüfkammer sowie eine Prüfkammer vorzuschlagen, das bzw. die eine vergleichsweise kompakte und technisch einfache Ausbildung der Prüfkammer ermöglicht.

Diese Aufgabe wird durch ein Verfahren mit den Merkmalen des Anspruchs 1 und eine Prüfkammer mit den Merkmalen des Anspruchs 14 gelöst.

Bei dem erfindungsgemäßen Verfahren zur Konditionierung von Luft in einem gegenüber einer Umgebung verschließbaren und temperaturgedämmten Prüfraum einer Prüfkammer, insbesondere Klimakammer zur Aufnahme von Prüfgut, wird mittels einer Kühleinreichung einer Temperiervorrichtung der Prüfkammer, mit einem Kühlkreislauf mit Kohlenstoffdioxid als einem Kältemittel, einem Wärmeübertrager im Prüfraum, einem Niederdruckverdichter und einem in einer Strömungsrichtung des Kältemittels dem Niederdruckverdichter nachfolgenden Hochdruckverdichter, einem Gaskühler und einem Expansionsventil eine Temperatur in einem Temperaturbereich von - 20°C bis + 180°C

innerhalb des Prüfraums ausgebildet, wobei die Temperatur in dem Prüfraum mittels einer Steuervorrichtung der Prüfkammer gesteuert und/oder geregelt wird, wobei der Kühlkreislauf einen internen Wärmeübertrager aufweist, der an einer Hochdruckseite des Kühlkreislaufs in der Strömungsrichtung nachfolgend dem Gaskühler und vor dem Expansionsventil angeschlossen ist, wobei der interne Wärmeübertrager mit einem Mitteldruckbypass des Kühlkreislaufs gekoppelt ist, wobei der Mitteldruckbypass in der Strömungsrichtung nachfolgend dem internen Wärmeübertrager oder dem Gaskühler und vor dem Expansionsventil an der Hochdruckseite sowie vor dem Hochdruckverdichter und nachfolgend dem Niederdruckverdichter an einer Mitteldruckseite des Kühlkreislaufs angeschlossen ist, wobei mittels eines zweiten Expansionsventils Kältemittel von der Hochdruckseite über den internen Wärmeübertrager in die Mitteldruckseite dosiert wird.

Bei dem erfindungsgemäßen Verfahren wird durch eine Temperaturisolierung von Seitenwänden, Bodenwänden und Deckenwänden ein Wärmeaustausch mit einer Umgebung des Prüfraums weitgehend vermieden. Der Wärmeübertrager ist an den Kühlkreislauf angeschlossen bzw. in diesen so integriert, dass im Kühlkreislauf zirkulierendes Kältemittel durch den Wärmeübertrager strömt. Der Wärmeübertrager des Kühlkreislaufs ist innerhalb des Prüfraums bzw. in einem Luftbehandlungsraum des Prüfraums angeordnet, sodass Luft in den Prüfraum über den Wärmeübertrager konditioniert bzw. temperiert wird. Der Gaskühler ist ebenso in den Kühlkreislauf integriert und als ein Wärmeübertrager ausgebildet. Der Gaskühler ist in den Kühlkreislauf in Strömungsrichtung nachfolgend dem Hochdruckverdichter angeordnet, wobei das verdichtete Kältemittel, welcher nach der Verdichtung unter einem hohen Druck steht und im Wesentlichen gasförmig oder dampfförmig bzw. als Nassdampf vorliegt, in dem Gaskühler bzw. Kondensator kondensieren kann und dann im Wesentlichen in einem flüssigen Aggregatzustand vorliegt. Auch ist es möglich, dass das gasförmige Kältemittel in dem Gaskühler nicht kondensiert und den Gaskühler im Wesentlichen in gasförmigen Zustand wieder verlässt. Der Gaskühler bzw. der betreffende Wärmeübertrager kann mit Mitteln zur Kühlung des Kältemittels, beispielsweise durch Luft oder Wasser, ausgestattet sein. Insbesondere kann der Gaskühler als luftgekühlter Lamellenrohrwärmeübertrager ausgebildet sein. Der Gaskühler ist dann besonders kompakt ausbildbar. Das Kältemittel strömt von dem Gaskühler über das Expansionsventil, über das es durch Expansion in Folge eines Druckabfalls wiederrum gasförmig oder dampfförmig wird. Dabei durchströmt es den Wärmeübertrager, der dadurch gekühlt wird. Nachfolgend wird das gasförmige Kältemittel wieder vom dem Niederdruckverdichter und dem Hochdruckverdichter angesaugt und verdichtet.

Bei der vorliegenden Erfindung ist vorgesehen, dass in der Hochdruckseite des Kühlkreislaufs nachfolgend dem Hochdruckverdichter und dem Gaskühler der interne Wärmeübertrager angeschlossen ist. Unmittelbar nachfolgend dem internen Wärmeübertrager und vor dem Expansionsventil ist der Mitteldruckbypass mit dem zweiten Expansionsventil am Kreislauf angeschlossen. Über das zweite Expansionsventil kann dann auch Kältemittel, welches den internen Wärmeübertrager bereits passiert hat, geleitet und expandiert werden. In dem Mitteldruckbypass nachfolgend dem zweiten Expansionsventil ist ebenfalls der interne Wärmeübertrager angeschlossen. Das am zweiten Expansionsventil expandierte Kältemittel durchströmt den internen Wärmeübertrager, der dadurch gekühlt wird. Folglich erfolgt eine Kühlung des internen Wärmeübertragers in der Mitteldruckseite und damit eine Kühlung des Kältemittels in der Hochdruckseite des internen Wärmeübertragers. Prinzipiell kann jedoch auch der Mitteldruckbypass in Strömungsrichtung nachfolgend dem Gaskühler und vor dem internen Wärmeübertrager an den Kühlkreislauf angeschlossen sein, derart, dass das Kältemittel dann über das zweite Expansionsventil und den internen Wärmeübertrager fließt. Nachfolgend dem internen Wärmeübertrager ist der Mitteldruckbypass zwischen dem Niederdruckverdichter und dem Hochdruckverdichter angeschlossen, derart, dass das über den Mitteldruckbypass geleitete Kältemittel an dieser Stelle dem in dem Kühlkreislauf zirkulierenden Kältemittel beigemischt werden kann.

Durch die Verwendung des Mitteldruckbypasses mit dem internen Wärmeübertrager wird es möglich, je nach Kühllastanforderung der Steuervorrichtung Kältemittel über den Mitteldruckbypass umzuleiten, sodass weniger Kältemittel über das Expansionsventil strömt. Gleichzeitig kann das über den Mitteldruckbypass fliesende Kältemittel mittels des internen Wärmeübertragers dazu genutzt werden das Kältemittel der Hochdruckseite zu temperieren. Die sehr hohe volumetrische Kälteleistung des Kohlenstoffdioxids wird so in Strömungsrichtung vor dem Wärmeübertrager abgezweigt und zur Kühlung des Kältemittels auf der Hochdruckseite genutzt, wenn weniger Kälteleistung im Prüfraum benötigt wird. Dadurch wird es dann auch möglich den Prüfraum kleiner auszubilden und den mit Kohlenstoffdioxid betriebenen Kühlkreislauf für kompaktere Prüfkammern nutzbar zu machen.

Der Kühlkreislauf kann in einem thermodynamisch unterkritischen oder transkritischen Betriebszustand betrieben werden. Je nach Kühllastanforderung innerhalb des Prüfraums kann der Betriebszustand mittels der Steuervorrichtung entsprechend verändert werden. Bei dem unterkritischen Betrieb des Kühlkreislaufs erfolgt eine Verflüssigung des Kältemittels im Gaskühler unterhalb des kritischen Punktes des Kältemittels sowie eine Entspannung am Expansionsventil und eine Umwandlung in die gasförmige Phase oder Nassdampf. Zumindest im unterkritischen Betriebszustand kann der Hochdruckverdichter und der Niederdruckverdichter betrieben werden. Der unterkritische Betriebszustand des Kühlkreislaufs entspricht einem Teillastbetrieb. Beim transkritischen Betriebszustand zirkuliert das Kältemittel im Kühlkreislauf im Wesentlichen im gasförmigen Zustand. D.h. eine Temperaturdifferenz ist soweit vermindert, dass das Kältemittel nicht im Gaskühler verflüssigt wird. Auch wird im transkritischen Betriebszustand ein Druck oberhalb des kritischen Punktes des Kältemittels am Gaskühler erreicht. Wenn beispielsweise eine hohe Kühllastanforderung vorliegt, bzw. eine Abkühlung ausgehend von + 180°C auf - 20°C erforderlich ist, kann der Kühlkreislauf transkritisch betrieben werden. Für den Fall, dass eine geringe Kühllastanforderung innerhalb des Prüfraums vorliegt, beispielsweise wenn eine Temperatur konstant gehalten werden soll, oder niedrige Umgebungstemperaturen vorliegen, kann der Kühlkreislauf unterkritisch betrieben werden. Dadurch kann insbesondere bei geringen Kühllastanforderungen eine Effizienzsteigerung im Gegensatz zu ausschließlich transkritischen Betriebszuständen erzielt werden. Der Wechsel zwischen dem unterkritischen und dem transkritischen Betriebszustand wird insbesondere durch den Mitteldruckbypass und den internen Wärmeübertrager möglich.

Über das zweite Expansionsventil kann Kältemittel von der Hochdruckseite in die Mitteldruckseite über den internen Wärmeübertrager dosiert werden, derart, dass das Kältemittel in dem internen Wärmeübertrager vollständig gasförmig bzw. entspannt wird und/oder das in der Mitteldruckseite befindliche Kältemittel gekühlt wird. So kann das verdichtete und stark überhitzte Kältemittel nach dem Niederdruckverdichter gekühlt werden. Auch kann das zweite Expansionsventil die Mitteldruckseite des internen Wärmeübertragers kühlen, um auf der Hochdruckseite des internen Wärmeübertragers befindliches transkritisches Kältemittel zusätzlich abzukühlen. Weiter kann das über den Mitteldruckbypass strömende, vergleichsweise kalte Kältemittel dann zwischen dem Niederdruckverdichter und dem Hochdruckverdichter eingeleitet werden. Wenn der Niederdruckverdichter in Betrieb ist, fördert dieser Kältemittel von einer Niederdruckseite des Kühlkreislaufs zu der Mitteldruckseite, wobei das Kältemittel dann hier bereits eine sehr hohe Temperatur aufweisen kann. Dies kann zu einer thermischen Überlastung am Hochdruckverdichter führen. Durch das Beimischen des vergleichsweise kälteren Kältemittels über den Mitteldruckbypass kann diese thermische Überlastung verhindert werden.

Mittels des internen Wärmeübertragers kann das Kältemittel der Hochdruckseite unterkühlt werden. Durch diese zusätzliche Unterkühlung kann eine Enthalpiedifferenz am Wärmeübertrager vergrößert werden, was wiederrum zu einer Erhöhung der Kälteleistung des Wärmeübertragers führt. Hierdurch wird es möglich besonders tiefe Temperaturen in dem Prüfraum effizient auszubilden.

Über das zweite Expansionsventil kann Kältemittel von der Hochdruckseite in die Mitteldruckseite dosiert werden, derart, dass ein Massenstrom von Kältemittel an dem Hochdruckverdichter stets größer ist als ein Massenstrom von Kältemittel an dem Niederdruckverdichter. Bei einer Unterkühlung des Kältemittels durch den internen Wärmeübertrager kommt es zu keiner Verlustleistung am Wärmeübertrager, da der geförderte Massenstrom über den Hochdruckverdichter deutlich größer sein kann als der geförderte Massenstrom über den Niederdruckverdichter. Ursache hierfür ist eine deutlich höhere Dichte des Kältemittels an einem Eintritt des Hochdruckverdichters im Gegensatz zu der Dichte des Kältemittels an einem Eintritt des Niederdruckverdichters. Die Massenströme in dem Kühlkreislauf können durch die Gleichung

$$0 = m_{Hochdruckverdichter} - (m_{Niederdruckverdichter} + m_{interner\ Wärmeübertrager})$$

beschrieben werden. Demnach ergibt sich der Massenstrom des internen Wärmeübertragers aus der Differenz aus den Massenströmen des Hochdruckverdichters und des Niederdruckverdichters. Die Steuervorrichtung kann so eingerichtet sein, dass dieses Verhältnis, durch eine Regelung des zweiten Expansionsventils, stets eingehalten wird. So kann ein Absinken eines Drucks der Mitteldruckseite verhindert werden. Dieses Absinken des Drucks der Mittelseite könnte zu einer Verschiebung eines Druckverhältnisses bei dem Hochdruckverdichter führen, so dass der Hochdruckverdichter und/oder der Niederdruckverdichter eine vorgesehene Einsatzgrenze überschreiten könnte, was es zu vermeiden gilt.

So kann eine Regelung des zweiten Expansionsventils in Abhängigkeit eines Drucks und/oder einer Temperatur des in der Mitteldruckseite befindlichen Kältemittels erfolgen. Die Messung des Drucks und/oder der Temperatur kann mittels entsprechender Sensoren erfolgen. Das zweite Expansionsventil kann dann mittels der Steuervorrichtung bzw. einer Regeleinrichtung der Steuervorrichtung so geregelt werden, dass eine Ansaugtemperatur des Hochdruckverdichters und/oder ein Druck an einer Eintrittsseite des Hochdruckverdichters in einem erforderlichen Bereich liegt. So kann eine mögliche Beschädigung des Hochdruckverdichters und/oder des Niederdruckverdichters infolge von unzuträglichen Temperaturen und Drücken mit einfachen Mitteln vermieden werden.

Ein Druck des Kältemittels auf der Hochdruckseite kann vermindert werden, wenn der Kühlkreislauf in einem Teillast-Betriebszustand betrieben werden kann. In einem Teillast-Betriebszustand wird der Kühlkreislauf nicht in Volllast betrieben. Vielmehr öffnet das Expansionsventil aufgrund einer abnehmenden Kühllastanforderung der Steuervorrichtung bzw. des Prüfraums mit Unterbrechungen, d. h. nicht dauerhaft oder vollständig. Dadurch, dass das Kältemittel auf der Hochdruckseite einen geringeren Druck aufweist, kann auch eine Verdichtungsendtemperatur des Hochdruckverdichters niedriger sein, wodurch eine abgegebene Wärmemenge über den Gaskühler über eine Umgebung, in welcher sich die Prüfkammer befindet, verringert werden kann. Eine thermische Belastung eines Aufstellungsraums der Prüfkammer, welcher möglicherweise klimatisiert ist, kann dann vermindert werden. Bei dem Teillast-Betriebszustand ist nur eine sehr geringe Kälteleistung erforderlich, beispielsweise weniger als 2% der Kälteleistung des Kühlkreislaufs, und/oder bei Temperaturen im Prüfraum von beispielsweise ≥ -10°C. Da eine Leistung der Verdichter, beispielsweise bei Kompressoren, kaum regelbar ist, wird bei einer geringen benötigten Kälteleistung und/oder bei einer geringen Temperaturdifferenz zwischen einer Soll-Temperatur und einer Ist-Temperatur im Prüfraum durch die Absenkung des Drucks des Kältemittels auf der Hochdruckseite die geringere Kälteleistung ausgebildet, ohne dass die Verdichter gleich abgeschaltet werden müssen. So können häufige Einschaltintervalle für den Niederdruckverdichter und den Hochdruckverdichter vermieden werden, weshalb die Verdichter mit langer Lebensdauer betrieben werden können.

In dem Kühlkreislauf kann ein zweiter Bypass mit zumindest einem dritten Expansionsventil ausgebildet sein, wobei der zweite Bypass in Strömungsrichtung nach dem internen Wärmeübertrager und vor dem Expansionsventil an die Hochdruckseite sowie nach dem Wärmeübertrager und vor dem Niederdruckverdichter an die Niederdruckseite angeschlossen sein kann, wobei eine Sauggastemperatur und/oder ein Sauggasdruck des Kältemittels auf der Niederdruckseite des Kühlkreislaufs vor dem Niederdruckverdichter derart geregelt werden kann, dass über das dritte Expansionsventil Kältemittel in die Niederdruckseite dosiert werden kann. Mittels des dritten Expansionsventils kann so die Sauggastemperatur und/oder der Sauggasdruck vor dem Niederdruckverdichter derart beeinflusst werden, dass sich eine Verdichtungsendtemperatur des Niederdruckverdichters innerhalb eines für den Niederdruckverdichter vorgesehenen Betriebsbereiches befindet. So kann eine Sauggastemperatur des Niederdruckverdichters besonders stark ansteigen, wenn eine Temperatur in dem Prüfraum von beispielsweise +180°C auf eine niedrigere Temperatur abgesenkt werden soll. Da sich der Wärmeübertrager im Prüfraum befindet, kann bei besonders hohen Temperaturen im Prüfraum von beispielsweise +180°C das Kältemittel mit dieser Temperatur aus dem Wärmeübertrager zu dem Niederdruckverdichter strömen. Bevor das stark überhitzte Kältemittel dem Niederdruckverdichter zugeführt wird, kann es durch das über das dritte Expansionsventil dosierte Kältemittel abgekühlt werden.

In dem Kühlkreislauf kann ein weiterer Bypass mit zumindest einem weiteren Ventil ausgebildet sein, wobei der weitere Bypass in Strömungsrichtung nach dem Hochdruckverdichter und vor dem Gaskühler an die Hochdruckseite sowie nach dem Wärmeübertrager und vor dem Niederdruckverdichter an die Niederdruckseite angeschlossen sein kann, wobei eine Sauggastemperatur und/oder ein Sauggasdruck des Kältemittels auf der Niederdruckseite des Kühlkreislaufs vor dem Niederdruckverdichter derart geregelt werden kann, und/oder eine Druckdifferenz zwischen der Hochdruckseite und der Niederdruckseite des Kühlkreislaufs derart ausgeglichen werden kann, dass über das weitere Ventil Kältemittel in die Niederdruckseite dosiert werden kann. Demnach ist der weitere Bypass so ausgebildet, dass über das weitere Ventil Kältemittel von der Hochdruckseite auf die Niederdruckseite geleitet werden kann. Das Kältemittel kann dabei überhitzt bzw. gasförmig sein. Ein Zurückleiten von überhitzten Kältemittel von der Hochdruckseite auf die Niederdruckseite mittels des weiteren Bypasses ist insbesondere dann vorteilhaft, wenn der Kühlkreislauf in einem Teillast-Betriebszustand betrieben wird. Da dann das Expansionsventil nur wenig oder selten geöffnet wird, besteht die Gefahr, dass ein Saugdruck vor dem Niederdruckverdichter zu weit absinkt. Bei der Verwendung von Kohlenstoffdioxid als Kältemittel kann bei einem Druck unterhalb von 5, 16 bar absolut Trockeneis entstehen, welches einen sicheren Betrieb des Kühlkreislaufes stören und gegebenenfalls den Niederdruckverdichter beschädigen könnte. Da über den weiteren Bypass unmittelbar nachfolgend dem Hochdruckverdichter stark überhitztes Kältemittel vor den Niederdruckverdichter geleitet werden kann, kann wirkungsvoll eine Bildung von Trockeneis verhindert werden. Darüber hinaus ist es auch möglich, über den weiteren Bypass eine Druckdifferenz zwischen der Hochdruckseite und der Niederdruckseite des Kühlkreislaufs auszugleichen, beispielsweise wenn die Kühleinrichtung nicht in Betrieb ist und dann die Gefahr besteht, dass infolge eines Temperaturausgleichs mit einer Umgebung Kältemittel erwärmt wird und sich ein unerwünscht hoher Druck in dem Kühlkreislauf einstellt.

Das Kältemittel kann gleichzeitig über den Mitteldruckbypass, den zweiten Bypass und den weiteren Bypass strömen, wenn der Kühlkreislauf in einem Teillast-Betriebszustand betrieben wird. Wenn das Kältemittel über den weiteren Bypass zur Einstellung einer Sauggasttemperatur und/oder eines Sauggasdrucks auf der Niederdruckseite in diese eingeleitet wird, kann das dritte Expansionsventil ebenfalls geöffnet werden, um die Sauggastemperatur vor dem Niederdruckverdichter im Verhältnis zum Sauggasdruck niedrig zu halten, so dass ein diesbezüglicher Betriebsbereich des Niederdruckverdichters nicht überschritten wird.

Weiter kann dann auch ein Druck der Hochdruckseite vergleichsweise gering eingestellt werden, wobei dann das Expansionsventil, das zweite Expansionsventil, das dritte Expansionsventil und/oder das weitere Ventil unterschiedlich stark geöffnet werden können. Beispielsweise kann, je niedriger eine Temperatur in dem Prüfraum ist, desto stärker das zweite Expansionsventil geöffnet werden, wobei das weitere Ventil und das dritte Expansionsventil desto weniger geöffnet werden. Durch eine weitergehende Öffnung des dritten Expansionsventils und des weiteren Ventils würde ein Druck auf der Niederdruckseite ansteigen, wodurch eine Temperatur in dem Prüfraum nicht mehr gehalten werden könnte bzw. ebenfalls ansteigen würde. Folglich kann, wenn eine höhere Temperatur in dem Prüfraum ausgebildet werden soll, das dritte Expansionsventil und das weitere Ventil weiter geöffnet werden. Der Kühlkreislauf kann dann in einem thermodynamisch unterkritischen Betriebszustand betrieben werden, wodurch eine Effizienz des Kühlkreislaufs gesteigert werden kann.

Eine Drehzahl des Hochdruckverdichters und/oder des Niederdruckverdichters kann geregelt werden. Der Hochdruckverdichter und/oder der Niederdruckverdichter kann jeweils mit einem Frequenzenumrichter ausgebildet sein, welcher eine Drehzahlanpassung der Verdichter erlaubt. Durch eine Absenkung der Drehzahl kann ein Massenstrom des Kältemittels in einem Teillast-Betriebszustand des Kühlkreislaufs weiter verringert und so eine Effizienz der Kühleinrichtung in diesem Betriebszustand weiter gesteigert werden.

Vorteilhaft kann reines Kohlenstoffdioxid als das Kältemittel verwendet werden. Reines Kohlenstoffdioxid weist einen GWP von 1 auf, ist nicht brennbar, ungefährlich und kostengünstig erhältlich. Darüber hinaus ist Kohlenstoffdioxid ein Reinstoff bzw. azeotrop, was die vorteilhafte Durchführung des Verfahrens und dessen Varianten überhaupt erst ermöglicht. Ein Kältemittel mit zeotropen Verhalten würde hingegen eine Bereitstellung einer ausreichenden Menge von gasförmigem Kältemittel bei einer sehr geringen Temperaturdifferenz kaum ermöglichen und somit eine Leistungsregelung des Hochdruckverdichters kaum zulassen.

Mittels der Temperiervorrichtung kann eine Temperatur in einem Temperaturbereich von - 40°C bis + 180°C, bevorzugt von - 50°C bis + 180°C, besonders bevorzugt von - 55°C bis + 180°C, innerhalb des Prüfraums ausgebildet werden.

Die erfindungsgemäße Prüfkammer, insbesondere Klimakammer zur Konditionierung von Luft, umfasst einen gegenüber einer Umgebung verschließbaren und temperaturisolierten Prüfraum zur Aufnahme von Prüfgut, und eine Temperiervorrichtung zur Temperierung des Prüfraums, wobei mittels der Temperiervorrichtung eine Temperatur in einem Temperaturbereich von - 20°C bis + 180°C innerhalb des Prüfraums ausbildbar ist, wobei die Temperiervorrichtung eine Kühleinrichtung mit einem Kühlkreislauf mit Kohlenstoffdioxid als einem Kältemittel, einem Wärmeübertrager im Prüfraum, einem Niederdruckverdichter und einem in einer Strömungsrichtung des Kältemittels den Niederdruckverdichter nachfolgenden Hochdruckverdichter, einem Gaskühler und einem Expansionsventil aufweist, wobei die Prüfkammer eine Steuervorrichtung zur Steuerung und/oder Regelung der Temperatur in dem Prüfraum aufweist, wobei der Kühlkreislauf einen internen Wärmeübertrager aufweist, der an einer Hochdruckseite des Kühlkreislaufs in der Strömungsrichtung nachfolgend dem Gaskühler und vor dem Expansionsventil angeschlossen ist, wobei der interne Wärmeübertrager mit einem Mitteldruckbypass des Kühlkreislaufs gekoppelt ist, wobei der Mitteldruckbypass in der Strömungsrichtung nachfolgend dem internen Wärmeübertrager oder dem Gaskühler und vor dem Expansionsventil an der Hochdruckseite sowie vor dem Hochdruckverdichter und nachfolgend dem Niederdruckverdichter an einer Mitteldruckseite des Kühlkreislaufs angeschlossen ist, wobei mittels eines zweiten Expansionsventils Kältemittel von der Hochdruckseite über den internen Wärmeübertrager in die Niederdruckseite dosierbar ist. Zu den Vorteilen der erfindungsgemäßen Prüfkammer wird auf die Vorteilsbeschreibung des erfindungsgemäßen Verfahrens verwiesen.

Der Hochdruckverdichter und der Niederdruckverdichter können mit einem gemeinsamen Verdichtergehäuse ausgebildet sein. Prinzipiell können der Hochdruckverdichter und der Niederdruckverdichter auch mit zwei getrennten Verdichtergehäusen ausgebildet sein. Durch den Einsatz des Niederdruckverdichters und des Hochdruckverdichters in dem gemeinsamen Verdichtergehäuse wird ein benötigter Bauraum für die Verdichter wesentlich verkleinert. Die Verdichter können als Rollkolben-, sowie als vollhermetische Hubkolbenverdichter im Kapselformat ausgebildet sein. Weiter kann in der Strömungsrichtung nachfolgend dem Hochdruckverdichter in dem Kühlkreislauf ein Ölabscheider verbaut sein. Da in dem Prüfraum eine Temperatur von bis zu + 180°C erreicht werden kann, wird diese Temperatur dann über den Wärmeübertrager auch auf das darin enthaltene Kältemittel übertragen. Dies kann zu einem starken Alterungsprozess des in dem Kühlkreislauf befindlichen Öls führen, was wiederum zu einer Beschädigung der Verdichter führen kann. Mittels des Ölabscheiders kann eine Ölmenge innerhalb des Wärmeübertragers möglichst geringgehalten werden, so dass nur wenig Öl entsprechend hohen Temperaturen ausgesetzt ist. Eine Lebensdauer der Verdichter kann so weiter verlängert werden.

Die Temperiervorrichtung kann eine Heizeinrichtung mit einer Heizung und einem Heiz-Wärmeübertrager in dem Prüfraum aufweisen. Die Heizeinrichtung kann beispielsweise eine elektrische Widerstandsheizung sein, die den Heiz-Wärmeübertrager beheizt, derart, dass über den Heiz-Wärmeübertrager eine Temperaturerhöhung im Prüfraum ermöglicht wird. Wenn der Wärmeübertrager und der Heiz-Wärmeübertrager mittels der Steuervorrichtung zur Kühlung oder Erwärmung der im Prüfraum umgewälzten Luft gezielt gesteuert bzw. geregelt werden können, kann mittels der Temperiervorrichtung dann innerhalb des Prüfraums eine Temperatur in den vorstehend angegebenen Temperaturbereichen ausgebildet werden.

Weitere Ausführungsformen einer Prüfkammer ergeben sich aus den Merkmalsbeschreibungen der auf den Verfahrensanspruch 1 rückbezogenen Unteransprüche.

Nachfolgend wird eine bevorzugte Ausführungsform der Erfindung unter Bezugnahme auf die beigefügten Zeichnungen näher erläutert.

Es zeigen:

Fig. 1    eine schematische Darstellung einer Kühlreinrichtung;

Fig. 2    ein Druck-Enthalpie-Diagramm mit einem Betriebszustand des Kühlkreislaufs.

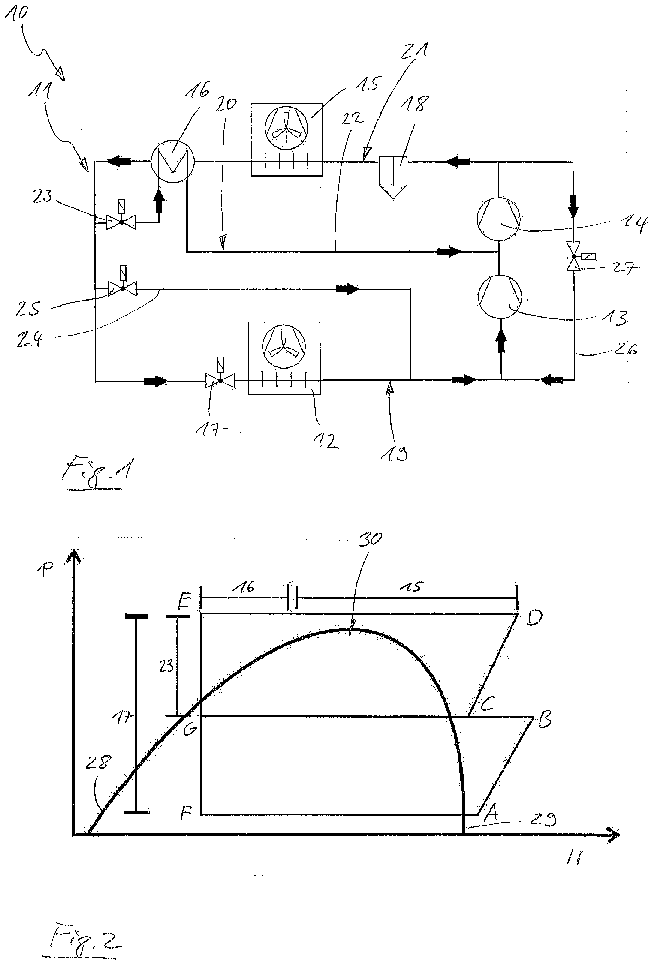

Die **Fig. 1** zeigt eine mögliche Ausführungsform einer Kühleinrichtung 10 einer hier nicht dargestellten Prüfkammer. Die Kühleinrichtung 10 umfasst einen Kühlkreislauf 11 mit Kohlenstoffdioxid ($CO_2$) als einem Kältemittel, einem Wärmeübertrager 12, einem Niederdruckverdichter 13, einem Hochdruckverdichter 14, einem Gaskühler 15, einem internen Wärmeübertrager 16 und einem Expansionsventil 17. Darüber hinaus ist ein Ölabscheider 18 vorgesehen. Der Gaskühler 15 ist hier in Art eines Wärmeübertragers bzw. Kondensators ausgebildet und über ein Wärmeträgermedium, wie beispielsweise Luft oder Wasser, gekühlt. Der Wärmeübertrager 12 ist in einem hier nicht dargestellten Luftbehandlungskanal des Prüfraumes der Prüfkammer angeordnet, derart, dass Luft im Prüfraum, die über den Luftbehandlungskanal umgewälzt wird, mittels des Wärmeübertragers 12 gekühlt werden kann. Weiter weist der Kühlkreislauf 11 eine Niederdruckseite 19, eine Mitteldruckseite 20 und eine Hochdruckseite 21 auf. In der Niederdruckseite 19 ist ein Druck des Kältemittels vergleichsweise niedriger als in der Mitteldruckseite 20. In der Mitteldruckseite 20 ist ein Druck des Kältemittels vergleichsweise niedriger als in der Hochdruckseite 21.

Der Kühlkreislauf 11 weist weiter in einer Strömungsrichtung des Kältemittels nachfolgend den internen Wärmeübertrager 16 und vor dem Expansionsventil 17 einen Mitteldruckbypass 22 auf, der in der Strömungsrichtung nachfolgend dem Niederdruckverdichter 13 und vor dem Hochdruckverdichter 14 mündet. In dem Mitteldruckbypass 22 ist ein zweites Expansionsventil 23 angeordnet. Das zweite Expansionsventil 23 ist dabei in der Strömungsrichtung vor dem internen Wärmeübertrager 16 angeschlossen. Von dem Gaskühler 15 kann nun im Wesentlichen flüssiges Kältemittel durch die Hochdruckseite 21 des internen Wärmeübertragers 16 geleitet und bei Bedarf über das zweite Expansionsventil 23 in die Mitteldruckseite des internen Wärmeübertragers 16 dosiert werden. Dabei wird das Kältemittel der Hochdruckseite 21 so weit unterkühlt, dass am Expansionsventil 17 bzw. dem Wärmeübertrager 12 eine noch niedrigere Temperatur ausgebildet werden kann. Gleichzeitig kann das über den Mitteldruckbypass 22 strömende Kältemittel dazu benutzt werden, eine Sauggastemperatur des Hochdruckverdichters 14 vergleichsweise niedrig zu halten.

Darüber hinaus umfasst der Kühlkreislauf 11 einen zweiten Bypass 24 mit einem dritten Expansionsventil 25. Der zweite Bypass 24 ist in der Strömungsrichtung des Kältemittels nachfolgend dem internen Wärmeübertrager 16 und vor dem Expansionsventil 17 sowie in der Strömungsrichtung nachfolgend dem Wärmeübertrager 14 und vor dem Niederdruckverdichter 13 an den Kühlkreislauf 11 angeschlossen. Mittels des dritten Expansionsventils 25 kann flüssiges Kältemittel auf die Niederdruckseite 19, vorbei an dem Expansionsventil 17 und dem Wärmeüberlager 12, geleitet werden. Dadurch wird es möglich, eine Sauggastemperatur und/oder einen Sauggasdruck in der Niederdruckseite 19 vor dem Niederdruckverdichter 13 zu regeln.

Weiter umfasst der Kühlkreislauf 11 einen weiteren Bypass 26 mit einem weiteren Ventil 27, wobei der weitere Bypass 26 in der Strömungsrichtung des Kältemittels nachfolgend dem Hochdruckverdichter 14 und vor dem Ölabscheider 18 bzw. dem Gaskühler 15 sowie in der Strömungsrichtung nachfolgend dem Wärmeübertrager 12 und vor dem Niederdruckverdichter 13 an dem Kühlkreislauf 11 angeschlossen ist. Mittels des weiteren Bypasses 26 bzw. des weiteren Ventils 27 kann in Abhängigkeit eines Betriebszustandes des Kühlkreislaufes 11 Kältemittel, insbesondere überhitztes Kältemittel bzw. gasförmiges Kältemittel, von der Hochdruckseite 21 auf die Niederdruckseite 19 vor den Niederdruckverdichter 13 geleitet werden. Hierdurch wird es ebenfalls möglich, eine Sauggastemperatur und/oder einen Sauggasdruck der Niederdruckseite 19 vor dem Niederdruckverdichter 13 zu regeln. Eine Regelung kann mittels einer nicht dargestellten Steuervorrichtung der Prüfkammer und im Kühlkreislauf 11 befindliche Sensoren, insbesondere Druck- und Temperatursensoren, erfolgen.

Die **Fig. 2** zeigt ein Druck-Enthalpie-Diagramm (Log-p-h-Diagramm) für das im Kühlkreislauf 11 zirkulierende Kältemittel für einen Betriebszustand des Kühlkreislaufs 11 bei einem Betrieb des Niederdruckverdichters 13 und des Hochdruckverdichters 14. In dem Diagramm ist die spezifische Enthalpie auf der Abszissenachse und der logarithmisch skalierte Druck auf der Ordinatenachse dargestellt. Eine Siedelinie 28 markiert einen Übergang von gesättigter Flüssigkeit im Nassdampf, wobei eine Taulinie 29 einen Übergang von Nassdampf zu gesättigtem Dampf markiert. Siedelinie 28 und Taulinie 29 treffen sich im kritischen Punkt 30.

Die **Fig. 2** zeigt einen überkritischen Betriebszustand des Kühlkreislaufs 11, bei dem ausgehend von der Position A das Kältemittel von der Niederdruckseite 19 mit dem Niederdruckverdichter 13 angesaugt und komprimiert wird, so dass ein Druck entsprechend der Position B in Strömungsrichtung nach dem Niederdruckverdichter 13 erreicht wird. Das Kältemittel wird nachfolgend der Position C von dem Hochdruckverdichter 14 angesaugt und bis zu der Position D hin verdichtet. Hierdurch strömt das Kältemittel den Gaskühler 15 im transkritischen Zustand und wird verflüssigt bzw. enthitzt. Danach passiert das Kältemittel den internen Wärmeübertrager 16 bis zur Position E. Ein Teil des flüssigen Kältemittels strömt über das Expansionsventil 17, wobei hier eine Entspannung des Kältemittels (Positionen E bis F) erfolgt, wobei das Kältemittel in dem Wärmeübertrager 12 verdampft (Positionen F bis A). Ein anderer Teil des Kältemittels strömt über den Mitteldruckbypass 22, wobei hier im zweiten Expansionsventil 23 ebenfalls eine Entspannung des Kältemittels (Positionen E bis G) erfolgt, wobei das Kältemittel in dem internen Wärmeübertrager 16 verdampft (Positionen G bis C). In der Position C vermischt sich das Kältemittel aus dem Mitteldruckbypass 22 mit dem Kältemittel aus dem Niederdruckverdichter 13.

**Patentansprüche**

1. Verfahren zur Konditionierung von Luft in einem gegenüber einer Umgebung verschließbaren und temperaturisolierten Prüfraum einer Prüfkammer, insbesondere Klimakammer, zur Aufnahme von Prüfgut, wobei mittels einer Kühleinrichtung (10) einer Temperiervorrichtung der Prüfkammer, mit einem Kühlkreislauf (11) mit Kohlenstoffdioxid ($CO_2$) als einem Kältemittel, einem Wärmeübertrager (12) im Prüfraum, einem Niederdruckverdichter (13) und einem in einer Strömungsrichtung des Kältemittels dem Niederdruckverdichter nachfolgenden Hochdruckverdichter (14), einem Gaskühler (15) und einem Expansionsventil (17) eine Temperatur in einem Temperaturbereich von -20 °C bis +180 °C innerhalb des Prüfraums ausgebildet wird, wobei die Temperatur in dem Prüfraum mittels einer Steuervorrichtung der Prüfkammer gesteuert und/oder geregelt wird,
   **dadurch gekennzeichnet,**
   **dass** der Kühlkreislauf einen internen Wärmeübertrager (16) aufweist, der an einer Hochdruckseite (21) des Kühlkreislaufs in der Strömungsrichtung nachfolgend dem Gaskühler und vor dem Expansionsventil angeschlossen ist, wobei der interne Wärmeübertrager mit einem Mitteldruckbypass (22) des Kühlkreislaufs gekoppelt ist, wobei der Mitteldruckbypass in der Strömungsrichtung nachfolgend dem internen Wärmeübertrager oder dem Gaskühler und vor dem Expansionsventil an der Hochdruckseite sowie vor dem Hochdruckverdichter und nachfolgend dem Niederdruckverdichter an eine Mitteldruckseite (20) des Kühlkreislaufs angeschlossen ist, wobei mittels eines zweiten Expansionsventils (23) Kältemittel von der Hochdruckseite über den internen Wärmeübertrager in die Mitteldruckseite dosiert wird.

2. Verfahren nach Anspruch 1,
   **dadurch gekennzeichnet,**
   **dass** der Kühlkreislauf (11) in einem thermodynamisch unterkritischen oder transkritischen Betriebszustand betrieben wird.

3. Verfahren nach Anspruch 1 oder 2,
   **dadurch gekennzeichnet,**
   **dass** über das zweite Expansionsventil (23) Kältemittel von der Hochdruckseite (21) in die Mitteldruckseite (20) über den internen Wärmeübertrager (16) dosiert wird, derart, dass das Kältemittel in dem internen Wärmeübertrager vollständig gasförmig wird und/oder das in der Mitteldruckseite befindliche Kältemittel gekühlt wird.

4. Verfahren nach einem der vorangehenden Ansprüche,
   **dadurch gekennzeichnet,**
   **dass** mittels des internen Wärmeübertragers (16) das Kältemittel der Hochdruckseite (21) unterkühlt wird.

5. Verfahren nach einem der vorangehenden Ansprüche,
   **dadurch gekennzeichnet,**
   **dass** über das zweite Expansionsventil (23) Kältemittel von der Hochdruckseite (21) in die Mitteldruckseite (20) dosiert wird, derart, dass ein Massenstrom von Kältemittel an dem Hochdruckverdichter (14) stets größer ist als ein Massenstrom von Kältemittel an dem Niederdruckverdichter (13).

6. Verfahren nach einem der vorangehenden Ansprüche,
   **dadurch gekennzeichnet,**
   **dass** eine Regelung des zweiten Expansionsventils (23) in Abhängigkeit eines Drucks und/oder einer Temperatur des in der Mitteldruckseite (20) befindlichen Kältemittels erfolgt.

7. Verfahren nach einem der vorangehenden Ansprüche,
   **dadurch gekennzeichnet,**
   **dass** ein Druck des Kältemittels auf der Hochdruckseite (21) vermindert wird, wenn der Kühlkreislauf (11) in einem Teillast-Betriebszustand betrieben wird.

8. Verfahren nach einem der vorangehenden Ansprüche,
   **dadurch gekennzeichnet,**
   **dass** in dem Kühlkreislauf (11) ein zweiter Bypass (24) mit zumindest einem dritten Expansionsventil (25) ausgebildet ist, wobei der zweite Bypass in Strömungsrichtung nach dem internen Wärmeübertrager (16) und vor dem Expansionsventil (17) an die Hochdruckseite (21) sowie nach dem Wärmeübertrager (12) und vor dem Niederdruckverdichter (13) an die Niederdruckseite (19) angeschlossen ist, wobei eine Sauggastemperatur und/oder ein Sauggasdruck des Kältemittels auf der Niederdruckseite des Kühlkreislaufs vor dem Niederdruckverdichter derart geregelt wird, dass über das dritte Expansionsventil Kältemittel in die Niederdruckseite dosiert wird.

9. Verfahren nach einem der vorangehenden Ansprüche,
**dadurch gekennzeichnet,**
**dass** in dem Kühlkreislauf (11) ein weiterer Bypass (26) mit zumindest einem weiteren Ventil (27) ausgebildet ist, wobei der weitere Bypass in Strömungsrichtung nach dem Hochdruckverdichter (14) und vor dem Gaskühler (15) an die Hochdruckseite (21) sowie nach dem Wärmeübertrager (12) und vor dem Niederdruckverdichter (13) an die Niederdruckseite (19) angeschlossen ist, wobei eine Sauggastemperatur und/oder ein Sauggasdruck des Kältemittels auf der Niederdruckseite des Kühlkreislaufs vor dem Niederdruckverdichter derart geregelt wird, und/oder eine Druckdifferenz zwischen der Hochdruckseite und der Niederdruckseite des Kühlkreislaufs derart ausgeglichen wird, dass über das weitere Ventil Kältemittel in die Niederdruckseite dosiert wird.

10. Verfahren nach Anspruch 8 und 9,
**dadurch gekennzeichnet,**
**dass** Kältemittel gleichzeitig über den Mitteldruckbypass (22), den zweiten Bypass (24) und den weiteren Bypass (26) strömt, wenn der Kühlkreislauf (11) in einem Teillast-Betriebszustand betrieben wird.

11. Verfahren nach einem der vorangehenden Ansprüche,
**dadurch gekennzeichnet,**
**dass** eine Drehzahl des Hochdruckverdichters (14) und/oder des Niederdruckverdichters (13) geregelt wird.

12. Verfahren nach einem der vorangehenden Ansprüche,
**dadurch gekennzeichnet,**
**dass** reines Kohlenstoffdioxid ($CO_2$) als das Kältemittel verwendet wird.

13. Verfahren nach einem der vorangehenden Ansprüche,
**dadurch gekennzeichnet,**
**dass** mittels der Temperiervorrichtung eine Temperatur in einem Temperaturbereich von -40 °C bis +180 °C, bevorzugt von -50 °C bis +180 °C, innerhalb des Prüfraums ausgebildet wird.

14. Prüfkammer, insbesondere Klimakammer zur Konditionierung von Luft, umfassend einen gegenüber einer Umgebung verschließbaren und temperaturisolierten Prüfraum zur Aufnahme von Prüfgut, und eine Temperiervorrichtung zur Temperierung des Prüfraums, wobei mittels der Temperiervorrichtung eine Temperatur in einem Temperaturbereich von -20 °C bis +180 °C innerhalb des Prüfraums ausbildbar ist, wobei die Temperiervorrichtung eine Kühleinrichtung (10) mit einem Kühlkreislauf (11) mit Kohlenstoffdioxid als einem Kältemittel, einem Wärmeübertrager (12) im Prüfraum, einem Niederdruckverdichter (13) und einem in einer Strömungsrichtung des Kältemittels dem Niederdruckverdichter nachfolgenden Hochdruckverdichter (14), einem Gaskühler (15) und einem Expansionsventil (17) aufweist, wobei die Prüfkammer eine Steuervorrichtung zur Steuerung und/oder Regelung der Temperatur in dem Prüfraum aufweist,
**dadurch gekennzeichnet,**
**dass** der Kühlkreislauf einen internen Wärmeübertrager (16) aufweist, der an einer Hochdruckseite (21) des Kühlkreislaufs in der Strömungsrichtung nachfolgend dem Gaskühler und vor dem Expansionsventil angeschlossen ist, wobei der interne Wärmeübertrager mit einem Mitteldruckbypass (22) des Kühlkreislaufs gekoppelt ist, wobei der Mitteldruckbypass in der Strömungsrichtung nachfolgend dem internen Wärmeübertrager oder dem Gaskühler und vor dem Expansionsventil an der Hochdruckseite sowie vor dem Hochdruckverdichter und nachfolgend dem Niederdruckverdichter an eine Mitteldruckseite (20) des Kühlkreislaufs angeschlossen ist, wobei mittels eines zweiten Expansionsventils (23) Kältemittel von der Hochdruckseite über den internen Wärmeübertrager in die Mitteldruckseite dosierbar ist.

15. Prüfkammer nach Anspruch 14,
**dadurch gekennzeichnet,**
**dass** der Hochdruckverdichter (14) und der Niederdruckverdichter (13) mit einem gemeinsamen Verdichtergehäuse ausgebildet sind.

16. Prüfkammer nach Anspruch 14 oder 15,
**dadurch gekennzeichnet,**
**dass** die Temperiervorrichtung eine Heizeinrichtung mit einer Heizung und einen Heiz-Wärmeübertrager in dem Prüfraum aufweist.

Fig.1

Fig.2

Europäisches
Patentamt

European
Patent Office

Office européen
des brevets

**EUROPÄISCHER RECHERCHENBERICHT**

**Nummer der Anmeldung**

**EP 22 18 8925**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2010/132399 A1 (MITRA BISWAJIT [US] ET AL) 3. Juni 2010 (2010-06-03) * Absatz [0008] – Absatz [0032]; Abbildungen 1,2 * ----- | 1-16 | INV. F25B1/10 F25B9/00 F25B40/00 F25B41/42 |
| X | US 2010/223939 A1 (MITRA BISWAJIT [US] ET AL) 9. September 2010 (2010-09-09) * Absatz [0016] – Absatz [0043]; Abbildungen 1-4 * ----- | 1-16 | |
| X | EP 1 939 548 A1 (MAEKAWA SEISAKUSHO KK [JP]; DOSHISHA [JP]) 2. Juli 2008 (2008-07-02) * Absatz [0007] – Absatz [0036]; Abbildungen 1-4 * ----- | 1-3,12, 14 | |

**RECHERCHIERTE SACHGEBIETE (IPC)**

**F25B**

Der vorliegende Recherchenbericht wurde für alle Patentansprüche erstellt

| Recherchenort | Abschlußdatum der Recherche | Prüfer |
|---|---|---|
| **München** | **15. Januar 2023** | **Lucic, Anita** |

EPO FORM 1503 03.82 (P04C03)

# EP 4 317 841 A1

## ANHANG ZUM EUROPÄISCHEN RECHERCHENBERICHT
## ÜBER DIE EUROPÄISCHE PATENTANMELDUNG NR.

EP 22 18 8925

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-01-2023

| Im Recherchenbericht angeführtes Patentdokument | Datum der Veröffentlichung | Mitglied(er) der Patentfamilie | Datum der Veröffentlichung |
|---|---|---|---|
| US 2010132399 A1 | 03-06-2010 | CN 101688725 A | 31-03-2010 |
| | | EP 2147269 A1 | 27-01-2010 |
| | | JP 5196452 B2 | 15-05-2013 |
| | | JP 2010525293 A | 22-07-2010 |
| | | US 2010132399 A1 | 03-06-2010 |
| | | WO 2008130358 A1 | 30-10-2008 |
| US 2010223939 A1 | 09-09-2010 | DK 2008039 T3 | 02-01-2017 |
| | | EP 2008039 A1 | 31-12-2008 |
| | | US 2010223939 A1 | 09-09-2010 |
| | | WO 2007111595 A1 | 04-10-2007 |
| EP 1939548 A1 | 02-07-2008 | CN 101326409 A | 17-12-2008 |
| | | EP 1939548 A1 | 02-07-2008 |
| | | JP 4973872 B2 | 11-07-2012 |
| | | JP WO2007046332 A1 | 23-04-2009 |
| | | US 2008245505 A1 | 09-10-2008 |
| | | WO 2007046332 A1 | 26-04-2007 |

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0344397 A2